# FASCICULE DE BREVET EUROPEEN

(11) **EP 3 577 541 B1**
(45) Date de publication et mention de la délivrance du brevet: **10.03.2021**
(21) Numéro de dépôt: 18705683.3
(22) Date de dépôt: 29.01.2018
(51) Int. Cl.: G06F 3/01, G06F 3/14

(54) **DISPOSITIF D'ANALYSE DE LA SYNCHRONISATION D'IMAGES SUR DES VOIES D'AFFICHAGE DISTINCTES**
VORRICHTUNG ZUR ANALYSE DER SYNCHRONISATION VON BILDERN AUF VERSCHIEDENEN ANZEIGEWEGEN
DEVICE FOR ANALYZING THE SYNCHRONIZATION OF IMAGES ON DIFFERENT DISPLAY PATHS

(30) Priorité: 01.02.2017 FR 1750848
(43) Date de publication de la demande: 11.12.2019
(73) Titulaire: PSA Automobiles SA, 78300 Poissy (FR)
(72) Inventeur: MIKA, Matthieu, 78640 St Germain de la Grange (FR); MION, Christophe, 54140 Jarville la Malgrange (FR)
(86) Numéro de dépôt international: PCT/FR2018/050188
(87) Numéro de publication internationale: WO 2018/142049

(56) Documents cités:
- EP-A2- 2 339 858
- WO-A1-98/32068
- FR-A1- 2 840 701
- GB-A- 2 325 602
- US-A- 5 963 200

## Description

L'invention concerne les systèmes qui comprennent au moins deux voies d'affichage distinctes.

On entend ici par « voie d'affichage » un ensemble d'éléments comprenant notamment une carte graphique et un moyen d'affichage.

Certains systèmes, comme par exemple et non limitativement les systèmes immersifs de réalité virtuelle, comprennent au moins deux voies d'affichage distinctes et chargées d'afficher des images de façon synchronisée.

Il est rappelé qu'un système immersif de réalité virtuelle est utilisé pour immerger des utilisateurs dans des environnements virtuels pour des raisons professionnelles ou ludiques. C'est notamment le cas, bien que non limitativement, dans le domaine des véhicules, éventuellement de type automobile. Une telle immersion peut être destinée, par exemple, à apprendre à un utilisateur à évoluer dans un environnement particulier ou à se servir d'objets ou fonctions présents dans un environnement particulier, ou à analyser le comportement d'un utilisateur dans un environnement particulier, ou encore à observer un environnement particulier en fonction de la position d'un utilisateur par rapport à ce dernier.

Comme le sait l'homme de l'art, un système immersif de réalité virtuelle comprend habituellement :
- au moins une cible propre à être solidarisée à un utilisateur pouvant se déplacer dans un espace prédéfini,
- des moyens de détection chargés de détecter la position en cours de cette cible dans cet espace prédéfini et de délivrer un signal représentatif de cette position en cours,
- au moins un moyen d'affichage chargé d'afficher dans l'espace prédéfini des images (éventuellement tridimensionnelles (ou 3D)) destinées à cet écran, et
- au moins une carte graphique chargée de définir en temps réel pour un moyen d'affichage associé des images (éventuellement stéréoscopiques) d'un environnement choisi, en fonction de la position en cours de la/chaque cible et de la position de l'écran du moyen d'affichage associé dans l'espace prédéfini.

Lorsque le système immersif comprend au moins deux moyens d'affichage associés respectivement à des cartes graphiques distinctes, il doit également comprendre des moyens de synchronisation chargés de synchroniser l'instant où les images « sortent » des cartes graphiques à destination des moyens d'affichage (écran, projecteur, ...). De tels moyens de synchronisation peuvent, par exemple, se présenter sous la forme de cartes contrôleur telles que celles appelées G-Sync® de la société Nvidia, ou bien de logiciels.

Malgré la présence de tels moyens de synchronisation, il arrive fréquemment que des images, devant être affichées simultanément sur des écrans différents (mais voisins), soient en réalité affichées avec un léger décalage. De tels décalages, qui résultent d'un problème de synchronisation entre cartes graphiques et/ou d'un dysfonctionnement d'au moins un moyen d'affichage, induisent des « cassures » dans chaque image globale qui est observée par l'utilisateur immergé, ce qui perturbe son immersion et donc son expérience, et de surcroît peut induire des malaises.

Or, il n'existe pas aujourd'hui de dispositif permettant d'analyser ces décalages et donc de permettre une détermination de leur origine.

On connait par le document US5963200 un appareil pour la synchronisation de multiples mémoires tampons d'image qui peuvent exister sur le même ordinateur ou des ordinateurs distincts pour certaines applications telles que l'affichage stéréo, la réalité virtuelle et l'enregistrement vidéo, qui nécessitent une telle synchronisation.

On connait aussi par le document WO98/32068 un procédé pour synchroniser à une vitesse d'affichage systémique, un premier ensemble d'images affichées par un premier écran de contrôle avec un second ensemble d'images affiché par un second écran de contrôle. Ce procédé utilise les vitesses de production d'images des deux ensembles d'images pour régler la vitesse d'affichage des images du système.

On connait aussi par le document EP2339858 un appareil de synchronisation d'images en trois dimensions (3D) et un système qui fournit une image en 3D. L'appareil de synchronisation d'image en 3D synchronise au moins une image 3D d'entrée en utilisant un seul signal sync et fournit en sortie une image 3D synchronisée.

On connait aussi par le document FR2840701 un procédé pour synchroniser un ensemble d'ordinateurs utilisés en cluster pour générer et traiter des images graphiques, chacun desdits ordinateurs étant équipé d'une carte graphique permettant de modifier si nécessaire les périodes d'affichage respectives desdites cartes graphiques en fonction du résultat du traitement de signaux de synchronisation.

On connait aussi par le document GB2325602 un système de synchronisation de l'échange de mémoire tampon de trame entre ordinateurs graphiques dans un système d'affichage multi-pipeline : les pipelines sont disposés en boucle fermée. Un pipeline est configuré comme maître ; les autres sont configurés comme des esclaves. Le maître échange ses tampons de trame et propage un signal d'échange principal

L'invention a donc notamment pour but d'améliorer la situation.

Elle propose notamment à cet effet un dispositif d'analyse destiné à faire des analyses dans un système comprenant :
- au moins deux moyens d'affichage chargés d'afficher des images nouvelles,
- au moins deux cartes graphiques chargées de définir ces images nouvelles respectivement pour les moyens d'affichage, et
- des moyens de synchronisation propres à synchroniser les instants de définition d'images nouvelles identiques par les cartes graphiques.

Ce dispositif d'analyse se caractérise par le fait qu'il comprend :
- au moins deux capteurs associés respectivement aux moyens d'affichage et propres chacun à générer un signal principal représentatif d'une nouvelle image en cas de détection de l'affichage d'une telle nouvelle image par le moyen d'affichage associé, et
- des moyens d'analyse propres à déterminer un premier instant de réception de chacun des signaux principaux, puis, lorsque des premiers instants de réception déterminés sont représentatifs d'une même nouvelle image, à déterminer un premier écart temporel entre ces premiers instants de réception déterminés.

On peut ainsi quantifier de façon très précise au moins le décalage temporel résultant d'un temps de latence et donc d'une désynchronisation entre deux voies d'affichage d'un système.

Le dispositif d'analyse selon l'invention peut comporter d'autres caractéristiques qui peuvent être prises séparément ou en combinaison, et notamment :
- il peut également comprendre des moyens de traitement propres à générer un signal auxiliaire représentatif d'une nouvelle image chaque fois qu'une carte graphique associée définit une telle nouvelle image. Dans ce cas, les moyens d'analyse peuvent être propres à déterminer un second instant de réception de chaque signal auxiliaire, puis, lorsque des premier et second instants de réception déterminés sont représentatifs d'une même nouvelle image, à déterminer un second écart temporel entre ces premier et second instants de réception déterminés, puis à comparer ce second écart temporel déterminé à un écart prédéfini afin de déterminer un éventuel retard d'affichage induit par le moyen d'affichage associé à la carte graphique qui est elle-même associée aux moyens de traitement ayant généré le signal auxiliaire ;
   > ses moyens d'analyse peuvent être propres, lorsque le premier écart temporel est représentatif d'un retard d'affichage par un moyen d'affichage qui n'est pas associé à la carte graphique, qui est associée aux moyens de traitement ayant généré le signal auxiliaire, et que le second écart temporel déterminé est égal à l'écart prédéfini, à signaler un problème de synchronisation des images ;
- en présence d'images présentant chacune une couleur choisie parmi un ensemble de couleurs, chaque capteur peut être propre à détecter la couleur de chaque nouvelle image affichée (par le moyen d'affichage associé) et à générer un signal principal qui est représentatif de cette couleur détectée.

L'invention propose également un système comprenant :
- au moins deux moyens d'affichage chargés d'afficher des images nouvelles,
- au moins deux cartes graphiques chargées de définir ces images nouvelles respectivement pour les moyens d'affichage,
- des moyens de synchronisation propres à synchroniser les instants de définition d'images nouvelles identiques par les cartes graphiques, et
- un dispositif d'analyse du type de celui présenté ci-avant.

Le système selon l'invention peut comporter d'autres caractéristiques qui peuvent être prises séparément ou en combinaison, et notamment :
- il peut également comprendre un ordinateur comprenant les cartes graphiques et les moyens de synchronisation ;
- en variante, il peut également comprendre des ordinateurs comprenant respectivement les cartes graphiques, et couplés respectivement aux moyens d'affichage ;
   > les ordinateurs peuvent comprendre respectivement des parties complémentaires des moyens de synchronisation ;
- l'un au moins de ses moyens d'affichage peut comprendre un écran et au moins un projecteur ;
- en variante, l'un au moins de ses moyens d'affichage peut comprendre un écran et une dalle à cristaux liquides ou à diodes couplée à des moyens de contrôle électroniques ;
- il peut constituer un système immersif de réalité virtuelle.

D'autres caractéristiques et avantages de l'invention apparaîtront à l'examen de la description détaillée ci-après, et du dessin annexé, sur lequel l'unique figure illustre schématiquement et fonctionnellement un exemple de système immersif de réalité virtuelle comprenant un exemple de réalisation d'un dispositif d'analyse selon l'invention.

L'invention a notamment pour but de proposer un dispositif d'analyse DA destiné à faire des analyses dans un système SI comprenant au moins deux voies d'affichage, afin de déterminer si ces dernière sont synchronisées, et éventuellement, dans la négative, d'identifier quels éléments ne sont pas synchronisés.

Il est rappelé que l'on entend ici par « voie d'affichage » un ensemble d'éléments comprenant notamment une carte graphique CGj et un moyen d'affichage Plj, EAj.

On considère dans ce qui suit, à titre d'exemple non limitatif, que le système SI est un système immersif de réalité virtuelle destiné à immerger un utilisateur dans un environnement virtuel représentatif d'une partie au moins d'un véhicule, éventuellement de type automobile (comme par exemple une voiture). Mais l'invention n'est pas limitée à ce type de système, et donc encore moins à l'environnement virtuel précité. En effet, l'invention concerne tout système comprenant au moins deux voies d'affichage d'images dont on cherche à déterminer si elles sont synchronisées.

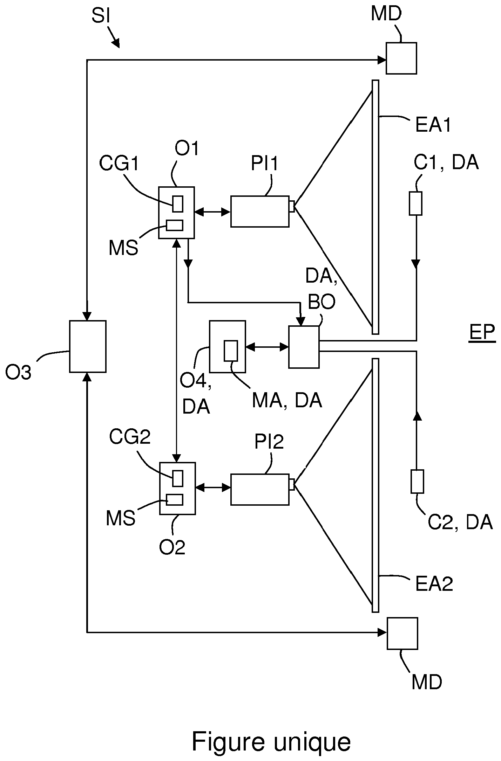

On a schématiquement représenté sur la figure 1 un exemple de système immersif (de réalité virtuelle) SI associé à un espace prédéfini EP, dans lequel peut se déplacer au moins un utilisateur équipé d'au moins une cible (non représentée), et comprenant un exemple de réalisation d'un dispositif d'analyse DA selon l'invention.

Comme illustré, le système (ici immersif de réalité virtuelle) SI comprend notamment des moyens de traitement O1-O3, au moins deux cartes graphiques CGj, des moyens de synchronisation MS, et au moins deux moyens d'affichage PIj, EAj.

On notera que le système SI comprend également, ici, des moyens de détection MD qui ne sont pas concernés par l'invention, mais qui sont propres à détecter la position en cours de chaque cible dans l'espace prédéfini EP et à délivrer un signal qui est représentatif de cette position en cours, à destination d'un ordinateur O3 des moyens de traitement.

Par exemple, ces moyens de détection MD peuvent comprendre deux caméras associées chacune à un émetteur de photons infrarouges et capables de filmer dans l'infrarouge. Chaque émetteur émet un faisceau infrarouge qui va se réfléchir sur les cibles portées par l'utilisateur. Chaque caméra enregistre des images des photons réfléchis sur les cibles, et envoie chaque image enregistrée à l'ordinateur O3 qui va déduire des images reçues la position dans l'espace de l'utilisateur à l'instant considéré. Mais les moyens de détection MD pourraient comprendre plus de deux caméras.

Chaque moyen d'affichage Plj, EAj est chargé d'afficher des images dans l'espace prédéfini EP. On notera que l'un au moins des moyens d'affichage peut comprendre un écran EAj et au moins un projecteur Plj, comme dans l'exemple illustré non limitativement sur l'unique figure, ou bien un écran EAj et une dalle à cristaux liquides (ou LCD) ou à diodes (LEDs ou OLEDs) couplée à ses moyens de contrôle électroniques associés, par exemple.

Le nombre d'écrans EAj (et donc de moyens d'affichage) est au moins égal à deux. Généralement, il est compris entre deux et cinq. Chaque écran EAj est installé dans l'espace prédéfini EP. On notera que les écrans voisins (ici EA1 et EA2) peuvent être éventuellement perpendiculaires entre eux.

Dans l'exemple illustré non limitativement sur l'unique figure, le système SI ne comprend que deux moyens d'affichage comportant chacun un écran EAj (j = 1 ou 2) associé à un projecteur Plj (j = 1 ou 2). Mais il pourrait comprendre plus de deux moyens d'affichage Plj, EAj, et par exemple trois, quatre ou cinq.

Chaque projecteur Plj est chargé de projeter sur l'écran EAj associé des images (éventuellement tridimensionnelles) d'un environnement choisi, définies en temps réel à son attention.

Par ailleurs, chaque moyen d'affichage Plj, EAj est associé à sa propre carte graphique CGj qui est chargée de définir chaque image qu'il doit afficher sur son écran EAj. En fonctionnement normal, cette définition se fait en fonction de la position en cours de la (des) cible(s) portée(s) par l'utilisateur et de la position de l'écran EAj associé dans l'espace prédéfini EP.

Dans l'exemple illustré non limitativement sur l'unique figure, les deux cartes graphiques CG1 et CG2 font parties de deux ordinateurs O1 et O2 distincts qui font eux-mêmes partie des moyens de traitement du système SI. Mais on pourrait envisager que les cartes graphiques CGj fassent partie d'un même ordinateur chargé de définir des images pour plusieurs moyens d'affichage Plj, EAj.

L'ordinateur O3 qui fait partie des moyens de traitement du système SI et qui est couplé aux moyens de détection MD, est ici également couplé aux ordinateurs O1 et O2 afin de les piloter en fonction des positions en cours détectées par les moyens de détection MD.

Les moyens de synchronisation MS sont chargés de synchroniser les instants de présentation des images aux moyens d'affichage Plj par les cartes graphiques CGj associées qui les ont générées. Par exemple, ces moyens de synchronisation MS peuvent, ici, se présenter sous la forme de cartes contrôleur implantées dans les ordinateurs O1 et O2. Ces cartes contrôleur, qui constituent des parties complémentaires des moyens de synchronisation MS, peuvent, par exemple, être celles qui sont appelées G-Sync® et fabriquées par la société Nvidia ou bien celles qui sont appelées ATI FirePro Synchronization Modules par la société AMD. Mais d'autres moyens de synchronisation peuvent être utilisés, et notamment via le réseau défini par les liaisons entre équipements du système SI et du dispositif d'analyse DA, ou via des signaux électriques. Dans ce cas, on date dans le temps les images générées par les cartes graphiques CGj, puis on compare les dates de ces images pour vérifier si elles sortent au même moment des cartes graphiques CGj. Ces dates peuvent transiter via un équipement réseau, via un équipement spécifique (GSync), ou via un dispositif logiciel, par exemple.

Comme illustré non limitativement sur l'unique figure, un dispositif d'analyse DA, selon l'invention, comprend au moins deux capteurs Cj et des moyens d'analyse MA. En fait, le nombre de capteurs Cj est égal au nombre de moyens d'affichage Plj, EAj, car chaque capteur Cj est associé à l'un des moyens d'affichage Plj, EAj et est propre à générer un signal principal spj qui est représentatif d'une nouvelle image en cas de détection de l'affichage d'une telle nouvelle image par le moyen d'affichage Plj, EAj associé.

On comprendra que chaque fois qu'une nouvelle image est affichée par un moyen d'affichage Plj, EAj, le capteur Cj, associé à ce dernier (et donc qui observe son écran EAj), génère un signal principal spj qui est représentatif de cette nouvelle image.

On entend ici par « nouvelle image affichée » une image qui vient d'être affichée et qui diffère de celle précédemment affichée par au moins une caractéristique.

Par exemple, au début d'une analyse le dispositif d'analyse DA peut en informer les cartes graphiques CGj afin qu'elles commencent à définir de nouvelles images pour les moyens d'affichage Plj, EAj associés. On notera que pendant une analyse du système SI, on n'utilise ses moyens de détection MD, ni sa (ses) cible(s).

Ces nouvelles images peuvent, par exemple et non limitativement, présenter chacune une couleur qui est choisie parmi un ensemble de couleurs, éventuellement de façon aléatoire. Ainsi, chaque nouvelle image peut, par exemple, être exclusivement définie par des pixels ayant tous la même couleur. Dans ce cas, chaque capteur Cj est propre à détecter la couleur de chaque nouvelle image affichée et à générer un signal principal spj qui est représentatif de cette couleur détectée. En variante, on pourrait afficher autre chose que des images de couleur unie, et notamment des motifs (QRCode ou symboles, par exemple).

On notera que les signaux principaux spj peuvent être de type numérique ou analogique.

Les moyens d'analyse MA sont propres à déterminer un premier instant de réception ir1j de chacun des signaux principaux spj. Puis, lorsque des premiers instants de réception ir1j déterminés sont représentatifs d'une même nouvelle image, les moyens d'analyse MA sont propres à déterminer un premier écart temporel et1 entre ces premiers instants de réception ir1j déterminés (soit ici et1 = ir12 - ir11).

On comprendra que dès que les moyens d'analyse MA reçoivent un signal principal spj ils déterminent et enregistrent l'instant de réception qui devient alors un premier instant de réception ir1j. Puis, ils comparent les signaux principaux spj (reçus des différents capteursCj), et, lorsque ces derniers (spj) sont identiques (et donc ici représentent une même couleur), ils déterminent un premier écart temporel et1 entre ces premiers instants de réception ir1j.

Ainsi un éventuel décalage temporel et1 résultant d'un temps de latence sur une voie d'affichage (CGj, Plj, EAj) d'un système SI peut être quantifié de façon très précise. Mais à ce stade d'une analyse, et en l'absence d'informations complémentaires, on ne sait que si les voies d'affichage du système SI sont synchronisées, mais il n'est pas possible de savoir quel équipement fait l'objet d'un dysfonctionnement au sein de la voie d'affichage qui présente un temps de latence par rapport à une autre voie d'affichage.

On notera que dans l'exemple illustré non limitativement sur l'unique figure, les moyens d'analyse MA font partie d'un ordinateur O4 qui est couplé (ici, indirectement) aux capteurs Cj. Mais cela n'est pas obligatoire. En effet, dans une variante ils pourraient constituer un équipement électronique (par exemple comprenant un oscilloscope et un circuit électronique d'analyse de signaux) couplé (directement ou indirectement) aux capteurs Cj. Dans une autre variante, les moyens d'analyse MA pourraient être implantés dans les moyens de traitement (par exemple dans l'ordinateur O3 qui est couplé aux moyens de détection MD). Par conséquent, ces moyens d'analyse MA peuvent être réalisés sous la forme de modules logiciels (ou informatiques (ou encore « software »)), ou bien d'une combinaison de circuits électroniques (ou « hardware ») et de modules logiciels.

On notera également que dans l'exemple illustré non limitativement sur l'unique figure, l'ordinateur O4 est couplé aux capteurs Cj via un boîtier électronique BO. Ce boitier met dans un paquet l'état de tous les capteurs Cj à un instant t et transmet ce paquet à l'ordinateur O4, par exemple sur le port USB afin qu'il soit directement exploitable. Mais les signaux pourraient entrer directement dans l'ordinateur O4 via une carte d'extension spécifique dans ce dernier (O4).

Afin d'analyser plus finement l'origine des éventuels décalages temporels et1 entre deux voies d'affichage, on peut configurer l'un des moyens de traitement, et plus précisément l'un des ordinateurs O1 et O2 (ici le premier ordinateur O1 (j = 1)), afin qu'il génère un signal auxiliaire sa1 (si j = 1) représentatif d'une nouvelle image chaque fois qu'une telle nouvelle image a été définie et donc chaque fois qu'il déclenche sa transmission au moyen d'affichage EA1, PI1 associé. Dans l'exemple qui est ici décrit, chaque signal auxiliaire sa1 est représentatif de la couleur de la nouvelle image.

Dans ce cas, les moyens d'analyse MA sont propres à déterminer un second instant de réception ir21 de chaque signal auxiliaire sa1. Puis, lorsque des premier ir11 et second ir21 instants de réception déterminés sont représentatifs d'une même nouvelle image, les moyens d'analyse MA déterminent un second écart temporel et2 entre ces premier ir11 et second ir21 instants de réception déterminés (soit, ici, et2 = ir11 - ir21). Ensuite, les moyens d'analyse MA comparent ce second écart temporel et2 déterminé à un écart prédéfini ep afin de déterminer un éventuel retard d'affichage ra induit par le moyen d'affichage EA1, PI1 qui est associé à l'ordinateur O1 ayant généré le signal auxiliaire sa1.

Cet écart prédéfini ep est égal à la différence, en fonctionnement normal (c'est-à-dire en l'absence de dysfonctionnement d'équipement(s)), entre, d'une part, le temps écoulé entre l'instant de définition d'une image nouvelle par la carte graphique CG1 et l'instant de réception du signal principal sp1 par les moyens d'analyse MA de l'ordinateur O4, et, d'autre part, le temps nécessaire à la transmission d'un signal auxiliaire sa1 entre l'ordinateur O1 et les moyens d'analyse MA. Cet écart prédéfini ep est déterminé préalablement avec la configuration du système SI et de son dispositif d'analyse DA, et stocké dans les moyens d'analyse MA.

On notera que dans l'exemple illustré non limitativement sur l'unique figure, l'ordinateur O4 (qui contient les moyens d'analyse MA) reçoit les signaux auxiliaires sa1 via le boîtier électronique BO. Par exemple, ce dernier (BO) reçoit du premier ordinateur O1 un signal auxiliaire sa1 (au format du port COM) qu'il intègre au paquet des capteurs et transmet à l'ordinateur O4 un signal auxiliaire sa1 converti au format du port USB afin d'être directement exploitable.

Lorsque les moyens d'analyse MA connaissent le second écart temporel et2, et que ce dernier (et2) est différent de l'écart prédéfini ep, ils peuvent en déduire qu'il existe un dysfonctionnement au niveau des moyens d'affichage du système SI.

Le premier écart temporel et1 permet de détecter un problème de synchronisation entre les voies d'affichage (CGj, Plj, EAj), et le second écart temporel et2 permet de mesurer la latence des moyens d'affichage dans le cas où il n'y a pas de problème de synchronisation entre les voies d'affichage (CGj, Plj, EAj).

## Revendications

1. Dispositif d'analyse (DA) pour un système (SI) comprenant au moins deux moyens d'affichage (Plj, EAj) chargés d'afficher des images nouvelles, au moins deux cartes graphiques (CGj) chargées de définir lesdites images nouvelles respectivement pour lesdits moyens d'affichage (Plj, EAj), et des moyens de synchronisation (MS) propres à synchroniser les instants de définition d'images nouvelles identiques par lesdites cartes graphiques (CGj), **caractérisé en ce qu'**il comprend i) au moins deux capteurs (Cj) associés respectivement auxdits moyens d'affichage (Plj, EAj) et propres chacun à générer un signal principal représentatif d'une nouvelle image en cas de détection de l'affichage d'une telle nouvelle image par ledit moyen d'affichage (Plj, EAj) associé, et ii) des moyens d'analyse (MA) propres à déterminer un premier instant de réception de chacun desdits signaux principaux, puis, lorsque des premiers instants de réception déterminés sont représentatifs d'une même nouvelle image, à déterminer un premier écart temporel entre lesdits premiers instants de réception déterminés.

2. Dispositif selon la revendication 1, **caractérisé en ce qu'**il comprend des moyens de traitement (01) propres à générer un signal auxiliaire représentatif d'une nouvelle image chaque fois qu'une carte graphique (CGj) associée définit une telle nouvelle image, et **en ce que** lesdits moyens d'analyse (MA) sont propres à déterminer un second instant de réception de chaque signal auxiliaire, puis, lorsque des premier et second instants de réception déterminés sont représentatifs d'une même nouvelle image, à déterminer un second écart temporel entre ces premier et second instants de réception déterminés, puis à comparer ce second écart temporel déterminé à un écart prédéfini afin de déterminer un éventuel retard d'affichage induit par le moyen d'affichage (Plj, EAj) associé à ladite carte graphique (CGj) qui est elle-même associée auxdits moyens de traitement (01) ayant généré le signal auxiliaire.

3. Dispositif selon la revendication 2, **caractérisé en ce que** lesdits moyens d'analyse (MA) sont propres, lorsque ledit premier écart temporel est représentatif d'un retard d'affichage par un moyen d'affichage (Plj', EAj') qui n'est pas associé à ladite carte graphique (CGj), qui est associée auxdits moyens de traitement (01) ayant généré le signal auxiliaire, et que ledit second écart temporel déterminé est égal audit écart prédéfini, à signaler un problème de synchronisation des images.

4. Dispositif selon l'une des revendications 1 à 3, **caractérisé en ce qu'**en présence d'images présentant chacune une couleur choisie parmi un ensemble de couleurs, chaque capteur (Cj) est propre à détecter la couleur de chaque nouvelle image affichée et à générer un signal principal représentatif de cette couleur détectée.

5. Système (SI) comprenant i) au moins deux moyens d'affichage (Plj, EAj) chargés d'afficher des images nouvelles, au moins deux cartes graphiques (CGj) chargées de définir lesdites images nouvelles respectivement pour lesdits moyens d'affichage (Plj, EAj), et des moyens de synchronisation (MS) propres à synchroniser les instants de définition d'images nouvelles identiques par lesdites cartes graphiques (CGj), **caractérisé en ce qu'**il comprend en outre un dispositif d'analyse (DA) selon l'une des revendications précédentes.

6. Système selon la revendication 5, **caractérisé en ce qu'**il comprend un ordinateur comprenant lesdites cartes graphiques (CGj) et lesdits moyens de synchronisation (MS).

7. Système selon la revendication 5, **caractérisé en ce qu'**il comprend des ordinateurs (01, 02) comprenant respectivement lesdites cartes graphiques (CGj), et couplés respectivement auxdits moyens d'affichage (Plj, EAj).

8. Système selon la revendication 7, **caractérisé en ce que** lesdits ordinateurs (01, 02) comprennent respectivement des parties complémentaires desdits moyens de synchronisation (MS).

9. Système selon l'une des revendications 5 à 8, **caractérisé en ce que** l'un au moins desdits moyens d'affichage (Plj, EAj) comprend un écran (EAj) et au moins un projecteur (Plj).

10. Système selon l'une des revendications 5 à 9, **caractérisé en ce qu'**il constitue un système immersif de réalité virtuelle.

## Patentansprüche

1. Analysevorrichtung (DA) für ein System (SI) mit mindestens zwei Anzeigemitteln (Plj, EAj), die für die Anzeige neuer Bilder zuständig sind, mindestens zwei Grafikkarten (CGj), die für die Definition der neuen Bilder jeweils für die Anzeigemittel (Plj, EAj) zuständig sind, und Synchronisationsmitteln (MS), die in der Lage sind, die Definitionszeitpunkte identischer neuer Bilder durch die Grafikkarten (CGj) zu synchronisieren, **dadurch gekennzeichnet, dass** sie i) mindestens zwei Sensoren (Cj), die jeweils den Anzeigemitteln (Plj) zugeordnet sind, umfasst, EAj) und jeweils geeignet zum Erzeugen eines Hauptsignals, das für ein neues Bild repräsentativ ist, im Falle der Erfassung der Anzeige eines solchen neuen Bildes durch die zugehörigen Anzeigemittel (Plj, EAj), und ii) Analysemittel (MA), die geeignet sind zum Bestimmen eines ersten Empfangszeitpunkts jedes der Hauptsignale, dann, wenn erste bestimmte Empfangszeitpunkte für dasselbe neue Bild repräsentativ sind, zum Bestimmen einer ersten Zeitdifferenz zwischen den ersten bestimmten Empfangszeitpunkten.

2. Vorrichtung nach Anspruch 1, **dadurch gekennzeichnet, dass** sie Verarbeitungsmittel (O1) umfasst, die in der Lage sind, jedes Mal, wenn eine zugeordnete Grafikkarte (CGj) ein solches neues Bild definiert, ein für ein neues Bild repräsentatives Hilfssignal zu erzeugen, und dass die Analysemittel (MA) in der Lage sind, einen zweiten Empfangszeitpunkt jedes Hilfssignals zu bestimmen, dann, wenn der erste und der zweite bestimmte Empfangszeitpunkt für das gleiche neue Bild repräsentativ sind, eine zweite Zeitdifferenz zwischen diesen ersten und zweiten bestimmten Empfangszeitpunkten zu bestimmen, dann diese zweite bestimmte Zeitdifferenz mit einer vordefinierten Differenz zu vergleichen, um eine mögliche Anzeigeverzögerung zu bestimmen, die durch die Anzeigemittel (Plj, EAj) induziert wird, die mit der Grafikkarte (CGj) verbunden sind, die selbst mit den Verarbeitungsmitteln (O1) verbunden ist, die das Hilfssignal erzeugt haben.

3. Vorrichtung nach Anspruch 2, **dadurch gekennzeichnet, dass** die Analysemittel (MA) geeignet sind, wenn die erste Zeitabweichung repräsentativ für eine Anzeigeverzögerung durch ein Anzeigemittel (PIj', EAj') ist, das nicht mit der Grafikkarte (CGj) verbunden ist, die ihrerseits mit dem Verarbeitungsmittel (O1) verbunden ist, das das Hilfssignal erzeugt hat, und dass die ermittelte zweite Zeitabweichung gleich der vordefinierten Abweichung ist, ein Problem der Synchronisation der Bilder zu signalisieren.

4. Vorrichtung nach einem der Ansprüche 1 bis 3, **dadurch gekennzeichnet, dass** bei Vorhandensein von Bildern, von denen jedes eine aus einem Satz von Farben ausgewählte Farbe aufweist, jeder Sensor (Cj) geeignet ist, die Farbe jedes neuen angezeigten Bildes zu erfassen und ein für diese erfasste Farbe repräsentatives Hauptsignal zu erzeugen.

5. System (SI), umfassend i) mindestens zwei Anzeigemittel (Plj, EAj), die für die Anzeige neuer Bilder zuständig sind, mindestens zwei Grafikkarten (CGj), die für die Definition der neuen Bilder jeweils für die Anzeigemittel (Plj, EAj) zuständig sind, und Synchronisationsmittel (MS), die in der Lage sind, die Zeitpunkte der Definition identischer neuer Bilder durch die Grafikkarten (CGj) zu synchronisieren, **dadurch gekennzeichnet, dass** es außerdem eine Analysevorrichtung (DA) nach einem der vorhergehenden Ansprüche umfasst.

6. System nach Anspruch 5, **dadurch gekennzeichnet, dass** es einen Computer mit den Grafikkarten (CGj) und den Synchronisationsmitteln (MS) umfasst.

7. System nach Anspruch 5, **dadurch gekennzeichnet, dass** es Computer (O1, 02) umfasst, die jeweils die Grafikkarten (CGj) umfassen und jeweils mit den Anzeigemitteln (Plj, EAj) gekoppelt sind.

8. System nach Anspruch 7, **dadurch gekennzeichnet, dass** die Computer (O1, 02) jeweils komplementäre Teile der Synchronisationsmittel (MS) umfassen.

9. System nach einem der Ansprüche 5 bis 8, **dadurch gekennzeichnet, dass** mindestens eines der Anzeigemittel (Plj, EAj) einen Bildschirm (EAj) und mindestens einen Projektor (Plj) umfasst.

10. System nach einem der Ansprüche 5 bis 9, **dadurch gekennzeichnet, dass** es ein immersives Virtual-Reality-System darstellt.

## Claims

1. Analysis device (DA) for a system (SI) comprising at least two display means (Plj, EAj) responsible for displaying new images, at least two graphic cards (CGj) responsible for defining said new images respectively for said display means (Plj, EAj), and synchronisation means (MS) capable of synchronising the instants of definition of identical new images by said graphic cards (CGj), **characterised in that** it comprises i) at least two sensors (Cj) associated respectively with said display means (Plj), EAj) and each capable of generating a main signal representative of a new image in the event of detection of the display of such a new image by the said associated display means (Plj, EAj), and ii) analysis means (MA) capable of determining a first instant of reception of each of the said main signals, then, when first determined instants of reception are representative of the same new image, of determining a first time difference between the said first determined instants of reception.

2. Device according to claim 1, **characterised in that** it comprises processing means (O1) capable of generating an auxiliary signal representative of a new image each time an associated graphics card (CGj) defines such a new image, and **in that** said analysis means (MA) are capable of determining a second instant of reception of each auxiliary signal, then, when first and second determined instants of reception are representative of the same new image, to determine a second time difference between these first and second determined reception instants, then to compare this second determined time difference with a predefined difference in order to determine a possible display delay induced by the display means (Plj, EAj) associated with said graphics card (CGj) which is itself associated with said processing means (O1) having generated the auxiliary signal.

3. Device according to claim 2, **characterised in that** said analysis means (MA) are suitable, when said first time deviation is representative of a display delay by a display means (Plj', EAj') which is not associated with said graphics card (CGj), which is associated with said processing means (O1) having generated the auxiliary signal, and that said second time deviation determined is equal to said predefined deviation, to signal a problem of image synchronisation.

4. Device according to one of claims 1 to 3, **characterised in that** in the presence of images each having a colour chosen from a set of colours, each sensor (Cj) is suitable for detecting the colour of each new image displayed and for generating a main signal representative of this detected colour.

5. System (SI) comprising i) at least two display means (Plj, EAj) responsible for displaying new images, at least two graphic cards (CGj) responsible for defining said new images respectively for said display means (Plj, EAj), and synchronisation means (MS) capable of synchronising the instants of definition of identical new images by said graphic cards (CGj), **characterised in that** it further comprises an analysis device (DA) according to one of the preceding claims.

6. System according to claim 5, **characterised in that** it comprises a computer comprising said graphic cards (CGj) and said synchronisation means (MS).

7. System according to claim 5, **characterised in that** it comprises computers (01, 02) respectively comprising said graphic cards (CGj), and respectively coupled to said display means (Plj, EAj).

8. System according to claim 7, **characterised in that** said computers (O1, 02) respectively comprise complementary parts of said synchronisation means (MS).

9. System according to one of claims 5 to 8, **characterised in that** at least one of said display means (Plj, EAj) comprises a screen (EAj) and at least one projector (Plj).

10. A system according to one of claims 5 to 9, **characterised in that** it constitutes an immersive virtual reality system.
